# EUROPEAN PATENT SPECIFICATION

(11) **EP 1 312 293 B1**
(45) Date of publication and mention of the grant of the patent: **27.10.2004**
(21) Application number: 02024411.7
(22) Date of filing: 28.10.2002
(51) Int. Cl.: A47J 36/38

(54) **Domestic oven for barbecuing**
Haushaltsofen für Bratrost
Four ménager pour barbecue

(30) Priority: 20.11.2001 IT BO20010698
(43) Date of publication of application: 21.05.2003
(73) Proprietor: Condor B S.r.l., 61019 S. Agata Feltria (Pesaro-Urbino) (IT)
(72) Inventor: Sbrega, Adriano, 61100 Pesaro (IT)
(74) Representative: Modiano, Guido, Dr.-Ing.

(56) References cited:
- EP-A- 0 277 920
- IT-B- 1 217 027
- US-A- 4 491 065
- US-A- 5 994 672

## Description

The present invention relates to a domestic oven for barbecuing.

Domestic ovens are known in which the heat required to cook food is generated by the combustion of natural gas or by electric means.

Ovens known as barbecues are also widely used for open-air cooking of meat or other food and use charcoal as their heat source. In these ovens, the food, arranged on a metal griddle, is cooked by direct exposure to the hot coals generated by the combustion of coal or charcoal placed below said griddle.

Cooking of food by frying, which occurs in particular vessels that contain oil heated by corresponding coils, is also widespread.

Barbecuing and frying of food typically generates combustion fumes, vapors, bad odors and ash, which must be collected and conveyed.

The need is felt to be able to barbecue and fry food also in a domestic environment without producing fumes, vapors and bad odors. However, this entails particular warnings as regards the fumes produced by barbecuing of food, the temperature of which is generally too high to convey them into ordinary exhaust ducts or flues and they must therefore be cooled conveniently as they exit the oven.

IT-B-1 217 027 discloses a cooking chamber having a combination of features as set forth in the precharacterizing portion of the appended claim 1. The aim of the present invention is to provide a domestic oven in which it is possible to barbecue food.

Within this aim, an object of the present invention is to provide a domestic oven in which it is also possible to fry food.

Another object of the present invention is to provide a domestic oven for barbecuing that allows complete and safe disposal of combustion fumes, vapors and bad odors.

Another object of the present invention is to provide an oven for barbecuing that is capable of discharging the combustion fumes at a conveniently low temperature.

Another object of the present invention is to achieve the above aim with a structure that is simple, relatively easy to provide in practice, safe in use, effective in operation, and has a relatively low cost.

In accordance with the invention, there is provided a domestic oven for barbecuing as defined in the appended claims.

Further characteristics and advantages of the invention will become better apparent from the following detailed description of a preferred but not exclusive embodiment of a domestic oven for barbecuing according to the invention, illustrated only by way of non-limitative example in the accompanying drawings, wherein:
Figure 1 is a front perspective view of the oven with the door open according to the invention;
Figure 2 is a detail perspective view of the cooking chamber;
Figure 3 is a rear perspective view of the oven;
Figure 4 is a perspective view of the means for supporting the heat source;
Figure 5 is a plan view of the supporting means;
Figure 6 is a plan view of constructive details of the supporting means;
Figure 7 is a view of a detail of Figure 6;
Figure 8 is a sectional view, taken along the line VIII-VIII of Figure 7.

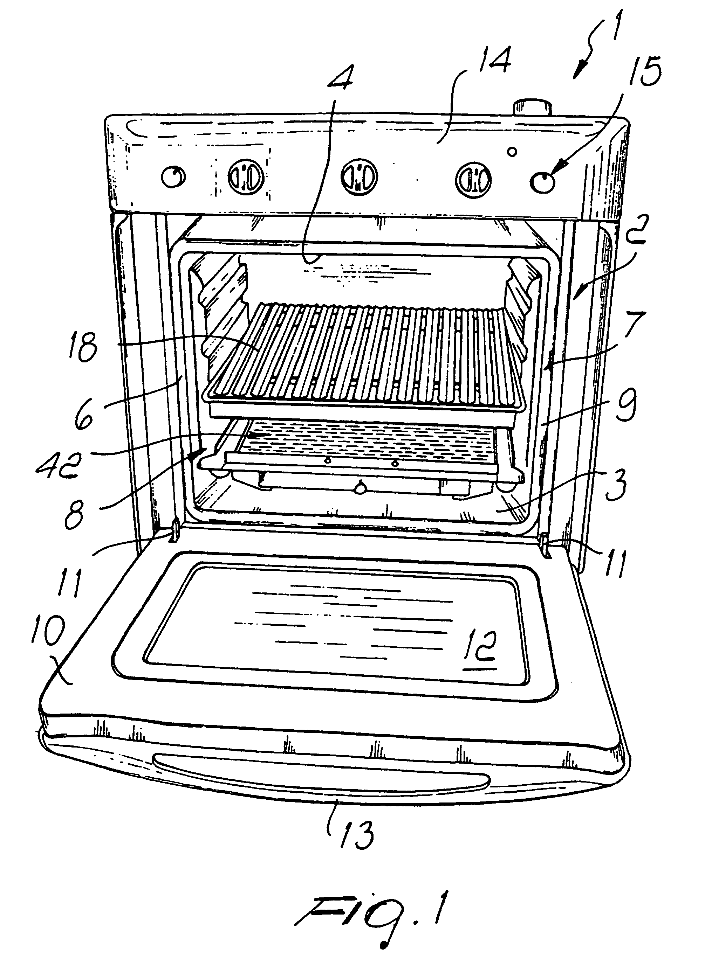

With reference to Figure 1, the reference numeral 1 generally designates a domestic oven for barbecuing according to the invention. The oven comprises a substantially box-like enclosure 2, constituted by a base 3, an upper wall 4, a rear wall 5 and two side walls 6 and 7 that form a cooking chamber 8, whose opening 9 is closed at the front by a door 10 that is articulated in a lower region by means of hinges 11 and is provided with an inspection window 12 and with an actuation handle 13. The door 10 can move from a horizontal open position to a vertical position that closes hermetically the chamber 8. The opening 9 of the chamber is surmounted by a panel 14, which is provided at the front with means, generally designated by the reference numeral 15, for starting and controlling the oven.

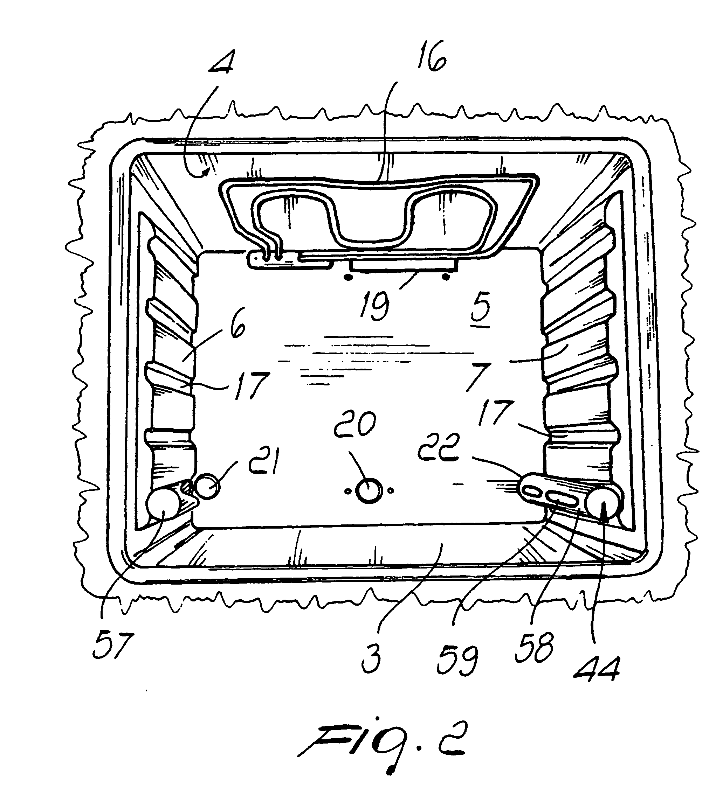

An upper coil 16 is provided inside the cooking chamber 8 and is rigidly coupled to the rear wall 5 (Figure 2); said coil runs parallel to the upper wall 4, is made of electrically conducting material and is suitable to cook food by radiating heat. The side walls 6 and 7 are crossed, inside the chamber 8 and horizontally, by a distribution of mutually opposite slots 17 for the sliding engagement of at least one metallic griddle 18 for supporting the food being cooked (Figure 1).

The cooking chamber 8 has, at the upper end of the rear wall 5, an outlet 19 for the cooking fumes and gases, which is constituted by an elongated rectangular slot that is formed substantially at the centerline, while at the lower end there is a central hole 20 and there are two lateral holes 21 and 22 for drawing air from the outside environment.

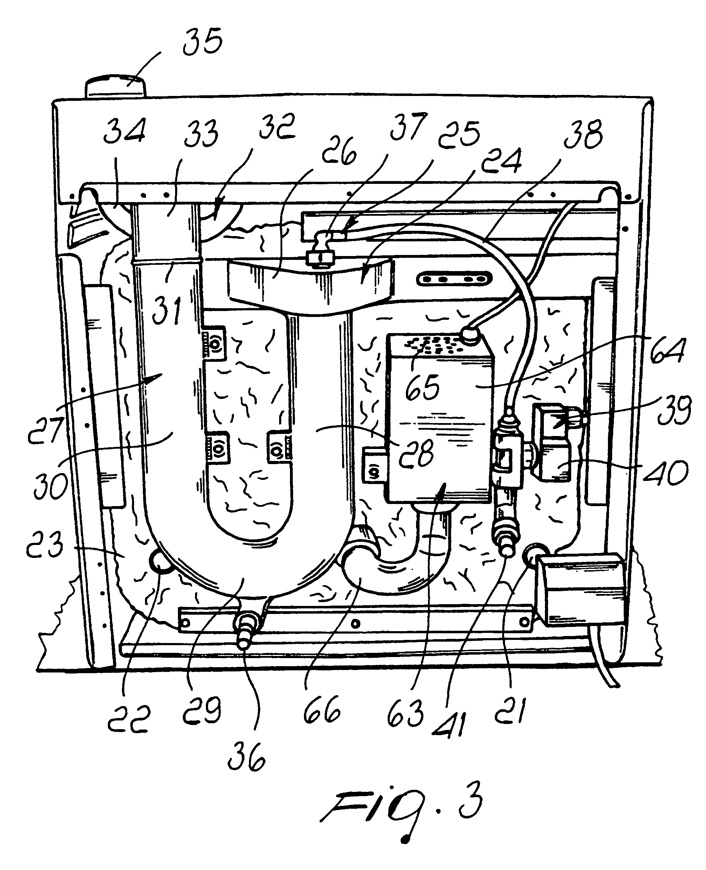

A lamina 23 made of thermally insulating material is applied to the rear wall 5 and externally (Figure 3) and a manifold 24 is connected to said lamina in order to collect and convey the combustion fumes and cooking gases into an external discharge duct, for example a flue. The manifold contains means, generally designated by the reference numeral 25, for reducing the temperature of the fumes and gases.

The manifold 24 has a substantially convergent inlet 26, which is rigidly coupled to the rear wall 5 and is connected to the outlet 19.

The inlet leads to a tubular element 27, which is constituted by a descending arm 28, an elbow 29 and an ascending arm 30, which ends with an outlet 31.

The outlet 31 is connected to means 32 for aspirating the combustion fumes and cooking gases, in the specific case to the intake 33 of a centrifugal fan 34 having a horizontal axis, which is associated with respective rotary actuation means, having a delivery duct 35 that exits from the upper wall 4. At the elbow 29 there is an outlet 36.

The reduction means 25 comprise a nebulizing nozzle 37 for cooling water, which is arranged on the inlet 26 and is orientated so as to project a jet of nebulized water in the same direction as the stream of the fumes and gases at the outlet of the chamber 8. The nozzle 37 is connected, by way of a corresponding duct 38, to a water supply by way of valve means 39, which comprise an electric valve 40 that affects the stream of cooling water that arrives from an intake duct 41.

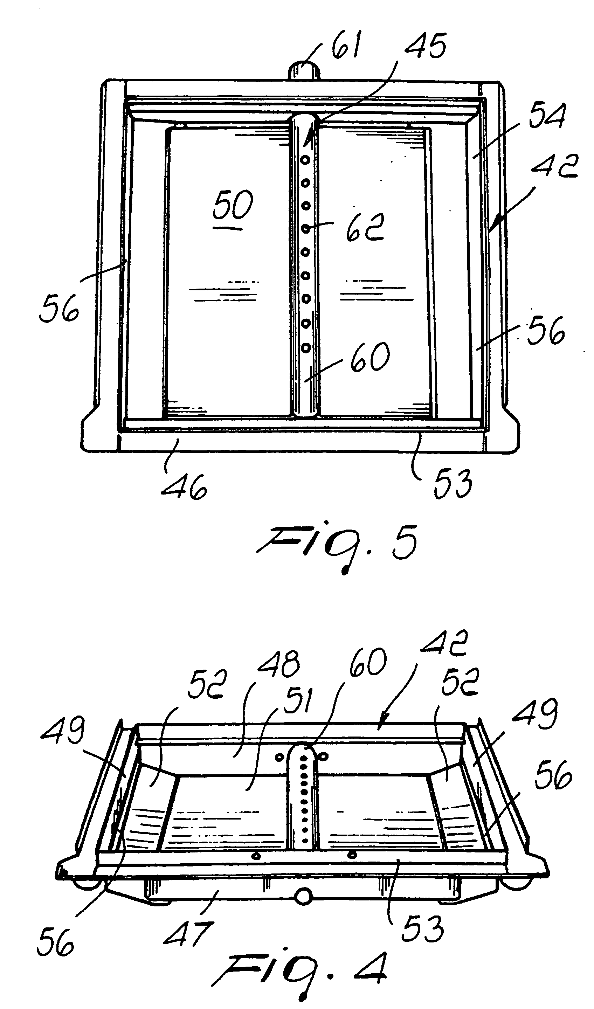

In the cooking chamber 8 there are means 42 for supporting a source for the heat for cooking the food (Figures 4 and 5). The food cooking heat source is preferably constituted by a layer of charcoal, which lies below the metallic griddle 18. The supporting means are constituted by a flattened quadrangular tray 42 that is open in an upper region, is removable, and is associated with means 44 for feeding the combustion and means 45 for starting the combustion.

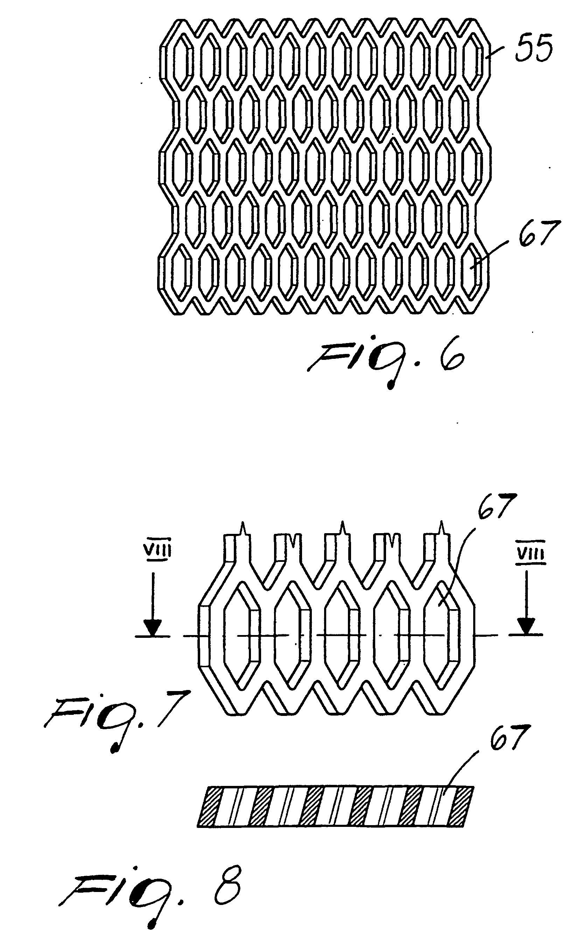

The tray 42 comprises a quadrangular frame 46, which is arranged so that it can slide along the slots 17 of the side walls 6 and 7 and from which a first transverse front wall 47, a second rear transverse wall 48 and two longitudinal walls 49 connected by a bottom 50 protrude in a lower region on the respective sides; said bottom is constituted by a horizontal portion 51 and by two lateral inclined portions 52, which are connected to the respective longitudinal walls. The frame 46 is provided, in an upper region, with a border 53 that forms, on said frame, a perimetric seat 54 for a griddle 55 for supporting the charcoal (Figure 6). Longitudinal openings 56, suitable to convey combustion air into said tray, are provided in the longitudinal walls 49 of the tray 42.

The means 44 for feeding the combustion are constituted by two sleeves 57 and 58 which are parallel and protrude, inside the chamber 8, longitudinally and laterally on opposite sides from the rear wall 5 and are connected to the outside by way of the respective lateral holes 21 and 22; said sleeves are closed at the opposite end with respect to the rear wall, and each sleeve has, on its lateral surface, a respective plurality of longitudinal slots 59, which are arranged so as to face each other and are suitable for diffusing air drawn from outside.

The means 54 for starting the combustion of the charcoal are constituted by an internally hollow tubular element 60, which is fixed longitudinally substantially at the centerline on the bottom 50 of the tray 42 (Figures 4 and 5); said tubular element has, at the end that corresponds to the second transverse wall 48, an inlet 61 connected to the central hole 20, and is closed at the opposite end on the first transverse wall 47. The tubular element 60 is affected, on its lateral surface, by a plurality of through holes 62 connected to the cavity of said tubular element.

Blower means 63 are rigidly coupled externally to the rear wall 5 (Figure 3), are connected to the central hole 20 and are suitable to convey air through the tubular element 60 and then into the tray 43. Said blower means comprise a blower 64, which draws air in an upper region from intakes 65 and is provided with a delivery that is connected to a tube 66 that leads to the central hole 20.

The supporting griddle 55 (Figures 6, 7 and 8) is constituted by a stretched quadrangular metal plate on which there are a plurality of slots 67 that are orientated so as to be inclined toward the rear wall 5, so as to direct the combustion air into the rear region of the cooking chamber and therefore away from the inspection window 12.

The method of use of the oven according to the invention is as follows: after extracting the tray 42 from the cooking chamber 8, a uniform layer of charcoal, for example prepackaged in a container made of combustible material, according to EPA.02007358.1, containing material suitable to start the combustion of said charcoal, is arranged on the supporting griddle 55.

Then the tray 42 is placed inside the cooking chamber 8, engaging the frame 46 within the slots 17, which can also accommodate one or more metallic griddles 18 on which the food to be cooked is distributed. After closing the door 10, the oven is started by operating the blower 64, which conveys combustion air through the tubular element 60 and the slots 67 under the charcoal layer; by way of the presence of igniting material, said charcoal can therefore ignite.

At the same time, the fan 34 is activated and, through the outlet 19 of the cooking chamber 8 and the manifold 24, draws the combustion fumes and the cooking gases generated inside the chamber. Furthermore, the electric valve 40 is controlled so as to feed cooling water to the nebulizing nozzle 37, which projects a jet of nebulized water into the descending arm 28 of the nebulizer 24 in the same direction as the outgoing stream of fumes and gases, reducing their temperature and then exiting through the outlet 36; the fumes and gases are therefore conveyed to the flue at the intended temperature. The combustion of the charcoal is fed by air drawn from outside through the lateral holes 21 and 22, conveyed into the sleeves 57 and 58, and diffused on the charcoal through the slots 59 and the openings 56.

In a variation of the oven according to the invention, the cooking heat source is constituted by frying oil, while the supporting means are constituted by a vessel that is open in an upward region and is suitable to contain said oil. Said vessel further comprises a coil made of electrically conducting material for heating the frying oil, which is provided with a plug for insertion in a respective power outlet provided in the cooking chamber 8.

The oven is therefore capable of barbecuing or frying food, conveying the combustion fumes and the cooking gases to an external discharge duct and at a conveniently reduced temperature.

It has thus been found that the invention achieves the intended aim and objects.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of protection of the appended claims.

The disclosures in Italian Patent Application No. BO2001A000698 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A domestic oven for barbecuing, comprising a food cooking chamber (8) provided with a front door (10), comprising a manifold (24) for the combustion fumes and the cooking gases that are generated in said chamber (8), said manifold being thermally insulated from said chamber and connected to an external discharge duct, means (25) for reducing the temperature of said fumes and gases being arranged in said manifold (24), said chamber (8) containing means (42) for supporting a heat source for cooking the food, said reduction means (25) comprising a nebulizing nozzle (37) for cooling water which is arranged at the outlet (19) of said cooking chamber (8) and is connected to a water supply by way of valve means (39), **characterized in that** said nozzle (37) is orientated so as to propel a jet of nebulized water in the same direction as the stream of said fumes and gases at the outlet (19) of said chamber (8), said manifold (24) comprises a tubular element (27) that is composed of a descending arm (28), an elbow (29) and an ascending arm (30), said manifold (24) comprises an outlet (36) for said cooling water provided at said elbow (29).

2. The oven according to claim 1, **characterized in that** said tubular element (27) has an inlet (26) that is connected to said cooking chamber (8) and an outlet (31) that is connected to means (32) for aspirating said fumes and gases.

3. The oven according to claim 1, **characterized in that** said supporting means (42) are constituted by a flattened tray (42), and **in that** said source is constituted by a layer of charcoal, said tray (42) being associated with means (45) for starting the combustion of said charcoal and with means (44) for feeding the combustion, and being provided with a seat (54) for a griddle (55) for supporting said charcoal.

4. The oven according to claim 3, **characterized in that** said griddle (55) is made of stretched metal plate and has a plurality of through slots (67) that are directed toward the rear wall (5) of said cooking chamber (8).

5. The oven according to claims 3 and 4, **characterized in that** said supply means (44) comprise two parallel sleeves (57, 58) that protrude longitudinally and laterally on opposite sides from said rear wall (5) of said chamber (8), are connected to the outside and are provided with longitudinal slots (59) on their lateral surface, conveying combustion air through respective openings (56) provided in the sides of said tray (42).

6. The oven according to claim 3, **characterized in that** said starting means (45) comprise a tubular element (60) that is fixed longitudinally substantially at the centerline on the bottom (50) of said tray (42) and has, at one end, an inlet (61) that can be connected to blower means (63) for blowing air drawn from outside and is closed at the opposite end and is provided with a plurality of holes (62) that are distributed on the lateral surface.

7. The oven according to claim 1, **characterized in that** said supporting means (42) are constituted by a vessel that is open in an upper region and **in that** said source is constituted by frying oil, said vessel comprising a coil made of electrically conducting material for heating said oil, which is provided with a plug for insertion in a respective outlet provided in said cooking chamber (8).

## Patentansprüche

1. Haushaltsofen zum Grillen, umfassend
eine Garkammer (8) für Speisen, die mit einer vorderen Tür (10) ausgestattet ist,
umfassend einen Verteiler (24) für den Verbrennungsrauch und die Gase der Zubereitung, die in der Kammer (8) erzeugt werden, wobei der Verteiler thermisch von der Kammer isoliert ist und mit einer äußeren Austragsführung verbunden ist,
in dem Verteiler (24) angeordnete Mittel (25) zum Reduzieren der Temperatur des Rauchs und der Gase,
wobei die Kammer (8) Mittel (42) zum Haltern einer Hitzequelle für das Garen der Speise einschließt,
wobei die Mittel (25) zum Reduzieren eine zerstäubende Düse (37) für kühlendes Wasser umfassen, die an dem Auslaß (19) der Garkammer (8) angeordnet ist, und die mit einem Wasservorrat durch ein Ventilmittel (39) verbunden ist,
**dadurch gekennzeichnet,**
**dass** die Düse (37) so orientiert ist, dass sie einen Strahl von zerstäubtem Wasser in die gleiche Richtung wie die Strömung des Rauchs und der Gase an dem Auslaß (19) der Kammer (8) treibt, wobei der Verteiler (24) ein rohrförmiges Element (27) umfaßt, das von einem absteigenden Arm (28), einer Krümmung (29) und einem aufsteigenden Arm (30) gebildet ist, wobei der Verteiler (24) einen Auslaß (36) für das kühlende Wasser umfaßt, der an der Krümmung (29) vorgesehen ist.

2. Ofen nach Anspruch 1, **dadurch gekennzeichnet, dass** das röhrenförmige Element (27) einen Einlaß (26) aufweist, der mit der Garkammer (8) verbunden ist, und einen Auslaß (31), der mit Mitteln (32) zum Ansaugen des Rauchs und der Gase verbunden ist.

3. Ofen nach Anspruch 1, **dadurch gekennzeichnet, dass** die Mittel (42) zum Haltern durch eine abgeflachte Wanne (42) gebildet sind, und dadurch, dass die Quelle durch eine Lage von Kohle gebildet ist, wobei die Wanne (42) mit Mitteln (45) zum Starten der Verbrennung der Kohle und mit Mitteln (44) zum Unterhalten der Verbrennung in Verbindung steht, und wobei sie mit einem Sitz (54) für einen Rost (55) zum Haltern der Kohle ausgestattet ist.

4. Ofen nach Anspruch 3, **dadurch gekennzeichnet, dass** das Rost (55) aus einer gestreckten Metallplatte gebildet ist und eine Vielzahl von durchgehenden Schlitzen (67) aufweist, die auf die rückwärtige Wand (5) der Garkammer (8) gerichtet sind.

5. Ofen nach Anspruch 3 und 4, **dadurch gekennzeichnet, dass** die Mittel (44) zur Versorgung zwei parallele Muffen (57, 58) umfassen, die longitudinal und seitlich an gegenüberliegenden Seiten der rückwärtigen Wand (5) der Kammer (8) sich erstrecken, mit dem Außenraum verbunden sind und mit longitudinalen Schlitzen (59) an deren Seitenflächen ausgestattet sind, die Verbrennungsluft durch jeweilige Öffnungen (56) transportieren, die in den Seiten der Wanne (42) vorgesehen sind.

6. Ofen nach Anspruch 3, **dadurch gekennzeichnet, dass** das Mittel (45) zum Starten ein röhrenförmiges Element (60) umfaßt, das longitudinal im wesentlichen der Mittellinie auf dem Boden (50) der Wanne (42) befestigt ist und an einem Ende einen Einlaß (61) aufweist, der mit Blasermitteln (63) verbunden werden kann, zum Blasen von von dem Außenraum angezogener Luft, und an dem entgegenliegenden Ende geschlossen ist, und mit einer Vielzahl von Bohrungen (62) ausgestattet ist, die auf der Seitenfläche verteilt sind.

7. Ofen nach Anspruch 1, **dadurch gekennzeichnet, dass** Mittel (42) zum Haltern durch ein Gefäß gebildet sind, das in einem oberen Bereich offen ist, und dadurch, dass die Quelle durch Bratöl gebildet ist, wobei das Gefäß eine aus einem elektrisch leitendem Material hergestellte Spule zum Heizen des Öls umfaßt, wobei es mit einem Stecker zum Einstecken in eine jeweilige Dose ausgestattet ist, die in der Garkammer (8) vorgesehen ist.

## Revendications

1. Four domestique pour cuisson au barbecue, comprenant une chambre de cuisson d'aliments (8) munie d'une porte avant (10), comprenant un collecteur (24) pour les fumées de combustion et les gaz de cuisson qui sont produits dans ladite chambre (8), ledit collecteur étant isolé thermiquement de ladite chambre et raccordé à un conduit d'évacuation externe, des moyens (25) pour réduire la température desdites fumées et desdits gaz étant disposés dans ledit collecteur (24), ladite chambre (8) contenant des moyens (42) pour supporter une source de chaleur pour cuire les aliments, lesdits moyens de réduction (25) comprenant une buse de nébulisation (37) pour eau de refroidissement qui est disposée à la sortie (19) de ladite chambre de cuisson (8) et est raccordée à une alimentation en eau par le biais de moyens de vanne (39), **caractérisé en ce que** ladite buse (37) est orientée de façon à projeter un jet d'eau nébulisé dans la même direction que le flux desdites fumées et desdits gaz à la sortie (19) de ladite chambre (8), ledit collecteur (24) comprend un élément tubulaire (27) qui est composé d'un bras descendant (28), d'un coude (29) et d'un bras montant (30), ledit collecteur (24) comprend une sortie (36) pour ladite eau de refroidissement disposée au niveau dudit coude (29).

2. Four selon la revendication 1, **caractérisé en ce que** ledit élément tubulaire (27) a une entrée (26) qui est raccordée à ladite chambre de cuisson (8) et une sortie (31) qui est raccordée à des moyens (32) pour aspirer lesdites fumées et lesdits gaz.

3. Four selon la revendication 1, **caractérisé en ce que** lesdits moyens de support (42) sont constitués d'un plateau (42) aplati, et **en ce que** ladite source est constituée d'une couche de charbon de bois, ledit plateau (42) étant associé à des moyens (45) pour lancer la combustion dudit charbon de bois et à des moyens (44) pour alimenter la combustion, et étant muni d'un siège (54) pour un gril (55) destiné à supporter ledit charbon de bois.

4. Four selon la revendication 3, **caractérisé en ce que** ledit gril (55) est constitué d'une plaque métallique étirée et a une pluralité de fentes débouchantes (67) qui sont dirigées vers la paroi arrière (5) de ladite chambre de cuisson (8).

5. Four selon les revendications 3 et 4, **caractérisé en ce que** lesdits moyens d'alimentation (44) comprennent deux manchons (57, 58) parallèles qui font saillie dans le sens longitudinal et latéral sur les côtés opposés à partir de ladite paroi arrière (5) de ladite chambre (8), sont raccordés à l'extérieur et sont munis de fentes longitudinales (59) sur leur surface latérale, transportant l'air de combustion à travers des ouvertures (56) respectives ménagées dans les côtés dudit plateau (42).

6. Four selon la revendication 3, **caractérisé en ce que** lesdits moyens de démarrage (45) comprennent un élément tubulaire (60) qui est fixé dans le sens longitudinal essentiellement sur la ligne médiane sur le fond (50) dudit plateau (42) et comporte, à une extrémité, une entrée (61) qui peut être raccordée à des moyens de soufflage (63) pour souffler l'air aspiré à partir de l'extérieur et est fermé, à l'extrémité opposée, et est muni d'une pluralité de trous (62) qui sont répartis sur la surface latérale.

7. Four selon la revendication 1, **caractérisé en ce que** lesdits moyens de support (42) sont constitués d'un récipient qui est ouvert dans une région supérieure et **en ce que** ladite source est constituée d'huile de friture, ledit récipient comprenant une résistance chauffante réalisée en matériau conducteur de l'électricité pour chauffer ladite huile, qui est munie d'une fiche destinée à être introduite dans une prise respective dans ladite chambre de cuisson (8).
